## Europäisches Patentamt

## European Patent Office

## Office européen des brevets

(19)

(11) Veröffentlichungsnummer: **0 158 691**
**B1**

(12) **EUROPÄISCHE PATENTSCHRIFT**

(45) Veröffentlichungstag der Patentschrift:
**07.01.88**

(51) Int. Cl.⁴: **B 23 K 35/02**, B 23 K 35/40

(21) Anmeldenummer: **84104383.9**

(22) Anmeldetag: **18.04.84**

(54) **Fülldraht.**

(43) Veröffentlichungstag der Anmeldung:
**23.10.85 Patentblatt 85/43**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**EP - A - 0 003 370**
**DE - B - 1 281 245**
**FR - A - 2 158 621**
**FR - A - 2 271 898**
**GB - A - 1 374 577**
**GB - A - 2 080 158**

(73) Patentinhaber: **Schweissindustrie Oerlikon Bührle AG,
Birchstrasse 230, CH-8050 Zürich (CH)**

(72) Erfinder: **Werner, Alexander, Talackerstrasse 90,
CH-8152 Glattbrugg (CH)**
Erfinder: **Pfenninger, Heinz, Etzelweg 15,
CH-8604 Volketswil (CH)**

(74) Vertreter: **EGLI-EUROPEAN PATENT ATTORNEYS,
Horneggstrasse 4, CH-8008 Zürich (CH)**

ACTORUM AG

**Beschreibung**

Die Erfindung betrifft einen Fülldraht, der in beliebiger Länge aus einem rohrförmigen, metallischen Mantel und aus einer, von diesem Mantel umgebenen Füllung aus pulverförmigem Material gebildet ist, und ein Verfahren zu dessen Herstellung.

Fülldrähte, die in beliebiger Länge, vor allem für die Verwendung in mechanisierten Schweissanlagen, hergestellt werden, weisen einen rohrförmigen, metallischen Mantel auf, in dessen Innenraum eine Füllung aus pulverförmigem Material eingebracht ist. Für die Herstellung solcher Fülldrähte sind verschiedene Verfahren und Anlagen bekannt.

Bei einem bekannten Verfahren (EPA1-3 370) wird ein metallisches Band zu einer Rinne verformt, in welche pulverförmiges Füllmaterial eingebracht wird, worauf die Rinne verformt und in einer Schweissstation verschweisst wird. Das eingebrachte pulverförmige Füllmaterial kann beispielsweise ein aus verschiedenen Komponenten zusammengesetztes Gemisch sein, dessen Komponenten beispielsweise ein flussmittelbildendes Material, ein schlackenbildendes Material und/oder ein Metalle oder Metalloxide enthaltendes Material aufweisen. Solche Gemische weisen den Nachteil auf, dass sie sich bei der Lagerung entmischen und dann bei der Dosierung in die Rinne in einer von der ursprünglichen Gemischzusammensetzung abweichenden Zusammensetzung eingebracht werden. Durch die Verwendung einer pulverförmigen Füllung aus agglomerierten Materialteilchen kann zwar der erwähnten Entmischungsgefahr entgegengewirkt werden, jedoch bedingt dies einen erhöhten Fertigungsaufwand.

Um die Fliessfähigkeit des Füllmaterials zu gewährleisten, muss die Korngrösse des Füllmaterials entsprechend klein gehalten werden. Deswegen besteht die Gefahr, dass sich solche Teilchen an den Längskanten der nach oben offenen Rinne festsetzen und dadurch den Schweissvorgang beeinträchtigen, so dass keine saubere Schweissnaht gebildet werden kann. Dieser Nachteil kann vor allem bei Pulverfüllungen auftreten, die ferritische oder ferromagnetische Komponenten aufweisen, deren Teilchen durch die beim Schweissen auftretenden Magnetfelder bewegt werden können. Es ist zwar bekannt, diesem Problem dadurch zu begegnen, dass das eingebrachte Füllmaterial zuerst durch ein Deckband abgedeckt und erst dann die Rinne zu einem Rohr gestaucht wird und die Längskanten verschweisst werden (DE-A1-2 515 342). Eine andere Lösung dieses Problems besteht darin, dass an dem für die Herstellung des Fülldrahtes verwendeten endlosen Band mit Hilfe einer Profiliereinrichtung an einer Längskante eine stufenförmige Sicke angeformt wird. Diese Sicke nimmt beim Stauchen der Rinne zum Rohr eine Lage ein, in der sie den Schlitz zwischen den beiden Längskanten auf der Innenseite abdeckt und dadurch das Festsetzen von Teilchen an den Seitenkanten verhindert (DE-A1-3 027 547). Der dadurch bedingte erhöhte Fertigungsaufwand ist zwar gering, jedoch fällt das für die Bildung der Sicke benötigte zusätzliche Material ungünstig ins Gewicht.

Der Erfindung liegt die Aufgabe zugrunde, einen Fülldraht der eingangs beschriebenen Art so auszugestalten, dass die Nachteile der bekannten Lösungen vermieden werden.

Diese Aufgabe wird gemäss der Erfindung dadurch gelöst, dass die pulverförmige Füllung aus mehreren Materialkomponenten besteht, die in zwei oder mehr übereinanderliegenden Lagen angeordnet sind.

Die Erfindung betrifft auch ein Verfahren zur vorteilhaften Herstellung des Fülldrahtes nach der Erfindung, bei dem vor dem Schweissen durch mindestens zwei nebeneinander aufgestellte Pulverdosierstellen unterschiedliche pulverförmige Materialkomponenten lagenweise in das durchlaufende Schlitzrohr eingebracht werden, derart, dass die unterste Lage durch die ersten Pulverdosierstelle und die weiteren Lagen durch, in Bewegungsrichtung des Schlitzrohres gesehen, die nachfolgenden Pulverdosierstellen eingebracht werden.

Die Erfindung ist in der Zeichnung in zwei Ausführungsbeispielen dargestellt und nachfolgend beschrieben. Es zeigen:

Fig. 1 eine erste Ausführungsform des erfindungsgemässen Fülldrahtes,

Fig. 2 eine zweite Ausführungsform des erfindungsgemässen Fülldrahtes und

Fig. 3 eine schematisch dargestellte Anlage zur Herstellung von Fülldrähten.

Die Erfindung geht von der Überlegung aus, dass die Entmischung eines für das Füllen eines Fülldrahtes vorgesehenen Gemisches dann vermieden werden kann, wenn die einzelnen Materialkomponenten des Gemisches getrennt in ein für die Herstellung des Fülldrahtes vorbereitetes, aus einem endlosen Band geformtes Schlitzrohr eingebracht werden. Durch die Dosierung der einzelnen Komponenten wird zuverlässig erreicht, dass die gewünschte Zusammensetzung des Gemisches an jeder Stelle des Schlitzrohres vorhanden ist.

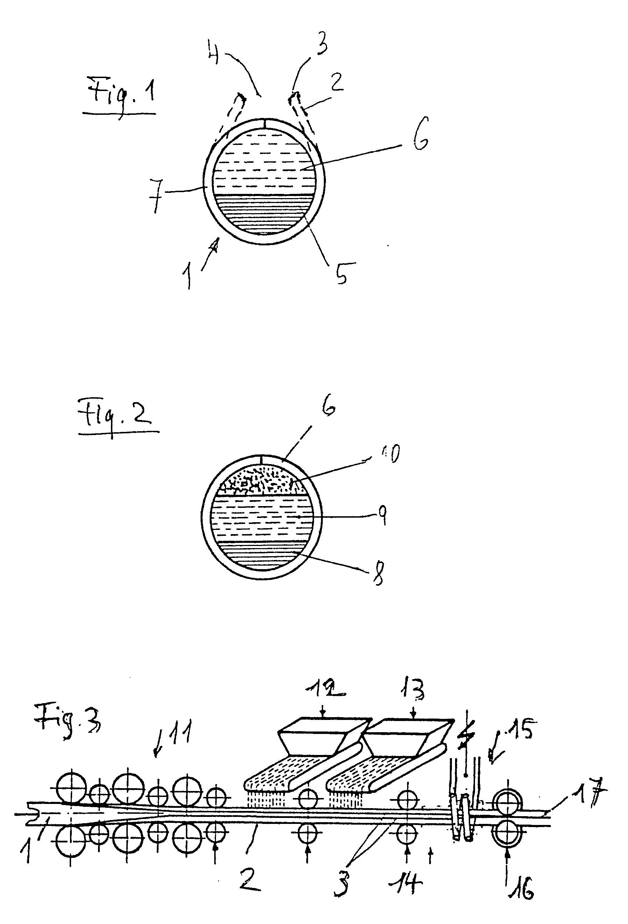

In Fig. 1 ist ein für die Herstellung des Fülldrahtes vorgesehenes endloses Band 1 dargestellt, das zu einem Schlitzrohr 2 verformt wird, siehe die gestrichelte Darstellung in Fig. 1. Zwischen den Längskanten 3 des Bandes 1 wird eine Öffnung in Form eines Schlitzes 4 gebildet, durch die die pulverförmige Füllung in das bewegte Schlitzrohr 2 eingebracht werden kann. Damit, wie bereits erwähnt wurde, ein Entmischen der pulverförmigen Füllung beim Lagern und Einfüllen zuverlässig vermieden wird, werden die einzelnen Materialkomponenten nacheinander und lagenweise eingebracht.

In dem in Fig. 1 dargestellten Fülldraht sind zwei Materialkomponenten in zwei Lagen 5, 6 eingebracht. Die im Grund des Rohres liegende unterste Lage 5 kann beispielsweise aus einem Eisen- oder Eisenlegierungspulver bestehen. Auch ferritische und andere magnetische Pulver können als unterste Lage 5 eingebracht werden.

Die Lage 6 besteht zweckmässig aus einer nichtmagnetischen Materialkomponente, beispielsweise aus einem mineralischen Material. Sind die beiden Lagen 5, 6 eingebracht, wird das Schlitzrohr 2 zu einem geschlossenen Rohr 7, siehe die ausgezogenen Linien in Fig. 1, gepresst, worauf dann das Zusammenschweissen der Längskanten 3 durchgeführt wird. Durch die Anordnung von Eisen- oder Eisenlegierungs-Pulvern als unterste Lage 5 wird erreicht, dass die darüberliegende Lage 6 die Lage 5 abschirmt, so dass sie durch Wirbelströme beim Schweissen nicht oder nur wenig beeinflusst wird. Es kann somit durch die lagenweise Anordnung der Schichten 5, 6 eine für das Schweissen günstige Voraussetzung geschaffen werden.

In Fig. 2 ist ein geschlossenes Rohr 6 dargestellt, dessen pulverförmige Materialfüllung aus drei Lagen 8, 9, 10 gebildet ist, d.h. es sind drei verschiedene Materialkomponenten durch drei Dosiervorrichtungen eingebracht worden. Hierbei kann die unterste Lage 8 wieder eine Komponente aus einem Eisen- oder Eisenlegierungs-Pulver sein, während die über der Lage 8 liegende Lage 9 beispielsweise eine feinkörnige Komponente und die auf der Lage 9 liegende Lage 10 eine grobkörnige Komponente sein kann. Durch eine solche Anordnung werden die Voraussetzungen für eine zuverlässige Schweissung weiter verbessert, da die oberste, grobkörnige Lage 10 eine verhältnismässig stabile Abdeckung bildet.

In Fig. 3 ist dargestellt, wie das lagenweise Einbringen der Materialkomponente durchgeführt wird. Das endlose Band 1 (in um 90° verdrehter Lage dargestellt) wird in einer Formeinrichtung 11 zu dem Schlitzrohr 2 (Fig. 1) vorgeformt und läuft in dieser Form an Pulverdosierwaagen 12, 13 vorbei, von denen eine der Zahl der einzubringenden Materialkomponenten entsprechende Zahl von Waagen erforderlich ist. Diese Waagen sind nebeneinander angeordnet, derart, dass die erste Dosierwaage 12 die zur Bildung der untersten Lage 5 erforderliche Komponente enthält. Das Schlitzrohr 2 bewegt sich mit der Lage 5 zur Dosierwaage 13, wo die zweite Lage 6 auf die erste Lage 5 eingebracht wird. Das Schlitzrohr 2 durchläuft dann eine Kalibrierstation 14, in der die Längskanten 3 weiter gegeneinander gestaucht werden. In einer nachfolgenden Schweiss-Station 15, beispielsweise mit einer HF-Schweissanlage, werden die Längskanten 3 des Schlitzrohres 2 auf Schweisstemperatur gebracht und anschliessend in einer Stauch-Walz-Station zusammengepresst, so dass sie zusammenschweissen. Das geschweisste Rohr 17 wird dann in einer Walz- und gegebenenfalls in einer Ziehoperation auf den gewünschten Durchmesser des Fülldrahtes gebracht. Für die Herstellung des Fülldrahtes nach Fig. 2 sind drei Pulverdosierwaagen erforderlich.

Die lagenweise Einbringung der Materialkomponenten der pulverförmigen Füllung zeigt beim Einsatz des Fülldrahtes in Schweissanlagen keinerlei Nachteile, da beim Schmelzen des Fülldrahtes die Komponenten sich in der entstehenden flüssigen Phase sofort gleichmässig vermischen.

Das lagenweise Einbringen der pulverförmigen Füllung bietet noch einen weiteren Vorteil. In einer gleichzeitig hinterlegten Patentanmeldung der Anmelderin EP-A1-158 693 wird dargestellt, dass die unterste Lage 5 bzw. 8 zur Verbesserung der Schweissleistung bei der HF-Schweissung des Schlitzrohres 2 beitragen kann, wenn das Material dieser Lage aus Eisenpulver besteht. Dann hat diese Lage eine ähnliche Eigenschaft wie ein im Rohrinnern zur Konzentration des Stromes angeordneter Impeder. Dieser besteht aus einem ferritischen Material und weist eine relative Permeabilität auf, die derjenigen des Eisenpulvers, dessen Eisenkörner wie bei einem Ferrit oxidiert sind, entspricht. Die gleiche Wirkung wird erzielt durch das Einlegen eines Stabes oder eines Drahtes in das Rohrinnere.

Das lagenweise Anordnen der pulverförmigen Materialkomponenten kann in gleicher Weise auch bei gefalzten Fülldrähten benützt werden.

**Patentansprüche**

1. Fülldraht, der in beliebiger Länge aus einem, eine Füllung aus pulverförmigem Material umgebenden rohrförmigen, metallischen Mantel (7) gebildet ist, wobei die pulverförmige Füllung aus mehreren Materialkomponenten besteht, dadurch gekennzeichnet, dass die Füllung aus zwei oder mehr übereinanderliegenden Komponenten besteht, die in zwei oder mehr übereinanderliegenden Lagen (5, 6; 8, 9, 10) angeordnet sind.

2. Fülldraht nach Anspruch 1, dadurch gekennzeichnet, dass die pulverförmige Füllung sich aus zwei Lagen (5, 6) zusammensetzt, von denen die eine Lage (5) ferromagnetische oder ferritische Materialteilchen aufweist.

3. Fülldraht nach Anspruch 1, dadurch gekennzeichnet, dass die pulverförmige Füllung sich aus drei Schichten (8, 9, 10) zusammensetzt, von denen die über einer Lage (8) aus ferromagnetischen oder ferritischen Materialteilchen angeordneten Lagen (9, 10) eine unterschiedliche Körnung, z.B. eine gröbere Körnung für die von der Lage (8) aus ferromagnetischen oder ferritischen Materialteilchen entfernteren Lage (10), aufweisen.

4. Verfahren zur Herstellung des Fülldrahtes nach einem der Ansprüche 1 bis 3, der durch Formen eines aus einem endlosen Band (1) gebildeten etwa horizontalen Schlitzrohres (2), durch Schweissen des Schlitzrohres an seinen Längskanten (3) zu einem Rohr (17) und durch Verringern des Durchmessers des Rohres auf den gewünschten Fülldrahtdurchmesser gebracht wird, dadurch gekennzeichnet, dass vor dem Schweissen durch mindestens zwei nebeneinander aufgestellte Pulverdosierstellen (12, 13) unterschiedliche pulverförmige Materialkomponenten lagenweise in das durchlaufende Schlitzrohr (2) eingebracht werden, derart, dass die unterste Lage (5; 8) durch die erste Pulverdosierstelle (12) und die weiteren Lagen (6; 9, 10) durch, in Bewegungsrichtung des Schlitzrohres (2) gesehen, die nachfolgenden Pulverdosierstellen (12) eingebracht werden.

**Claims**

1. Filled wire which is formed in any length from a tubular metallic cover (7) surrounding a filling of powdery material wherein the powdery filling consists of several material components characterised in that the filling consists of two or more components one above the next which are arranged in two or more layers (5, 6; 8, 9, 10) lying one on another.

2. Filled wire according to claim 1 characterised in that the powdery filling is composed of two layers (5, 6) of which the one layer (5) has ferromagnetic or ferritic material particles.

3. Filled wire according to claim 1 characterised in that the powdery filling is composed of three layers (8, 9, 10) of which the layers (9, 10) arranged above a layer (8) of ferromagnetic or ferritic material particles have a different particle size e.g. a coarser particle size for the layer (10) more removed from the layer (8) of ferromagnetic or ferritic material particles.

4. Process for the manufacture of the filled wire according to one of claims 1 to 3 which is made by forming a substantially horizontal slit tube (2) formed from an endless strip (1), by welding the slit tube at its longitudinal edges (3) to a tube (17) and by reducing the diameter of the tube to the desired filled wire diameter, characterised in that before the welding different powdery material components are introduced layerwise into the travelling slit tube (2) by means of at least two adjacently installed powder metering positions (12, 13) in such a way that the lowermost layer (5; 8) is introduced by the first powder metering position (12) and the further layers (6; 9, 10) by the subsequent powder metering positions (12) seen in the direction of movement of the slit tube (2).

**Revendications**

1. Fil fourré constitué sur une longueur quelconque par une enveloppe métallique tubulaire (7) entourant une matière de remplissage pulvérulente, la matière pulvérulente comprenant plusieurs constituants, caractérisé en ce que cette matière est constituée par deux ou plus de deux constituants qui sont disposés en deux ou plus de deux couches (5, 6; 8, 9, 10) superposées.

2. Fil fourré selon la revendication 1, caractérisé en ce que la matière de remplissage pulvérulente est composée de deux couches (5, 6) dont l'une (5) comprend des particules ferrmoagnétiques ou ferritiques.

3. Fil fourré selon la revendication 1, caractérisé en ce que la matière de remplissage pulvérulente est composée de trois couches (8, 9, 10) parmi lesquelles les couches (9, 10) qui sont placées au-dessus d'une couche (8) der particules ferromagnétiques ou ferritiques ont des granulométries différentes, par exemple une granulométrie plus forte pour la couche (10) la plus éloignée de la couche (8) en particules ferromagnétiques ou ferritiques.

4. Procédé de fabrication du fil fourré selon l'une des revendications 1 à 3 obtenue par formage d'une bande (1) sans fin pour réaliser un tube ouvert (2) sensiblement horizontal, par soudage du tube ouvert au niveau de ses bords longitudinaux (3) pour réaliser un tube (17) et par réduction du diamètre du tube au diamètre voulu pour le fil fourré, caractérisé en ce qu'avant le soudage deux postes au moins (12, 13) de dosage de poudre, situés l'un à coté de l'autre, introduisent couche par couche dans le tube ouvert mobile (2) différents constituants pulvérulents de telle manière que la couche la plus basse (5; 8) est introduite par le premier poste de dosage (12) et que les autres couches (6; 9, 10) sont introduites par les postes de dosage (12) successifs dans le sens du déplacement du tube ouvert (2.).

Fig. 1

Fig. 2

Fig. 3